# EUROPEAN PATENT APPLICATION

(11) **EP 4 036 754 A1**
(43) Date of publication of application: **03.08.2022**
(21) Application number: 21154443.2
(22) Date of filing: 29.01.2021
(51) Int. Cl.: G06F 16/29, G06F 16/55

(54) **APPLICATION SYSTEM FOR OPEN GEOSPATIAL CONSORTIUM DATA CONVERSION STANDARDIZATION AND METHOD THEREOF**

(71) Applicant: Mitac Information Technology Corp., Taipei City 114 (TW)
(72) Inventor: Lin, Chyi Cheng, 114 Taipei City (TW); Charng, Shiang, 114 Taipei City (TW)
(74) Representative: Lang, Christian

(57) **Abstract**

An application system for open geospatial consortium (OGC) data conversion standardization and a method thereof are disclosed. In the application system, a completely-trained image identifying model identifies an object message contained in streaming image data, and a coordinate position, an image sampling time, and a receiving time of the streaming image data are detected and embedded into the object message based on an OGC data standard, and the streaming image data is then converted into a time-space sequence metadata as training data for training the alarm model. The streaming data meeting the OGC data standard is received and inputted to the completely-trained alarm model for performing prediction. When a prediction result indicates an abnormal condition, an alarm message is outputted, so as to improve alarm accuracy and compatibility and availability of training data.

## Description

### BACKGROUND OF THE INVENTION

### 1. Field of the Invention

The present invention relates to a data conversion application system and a method thereof, and more particularly to an application system for open geospatial consortium (OGC) data conversion standardization and a method thereof.

### 2. Description of the Related Art

In recent years, with the popularization and rapid development of artificial intelligence (AI), various applications that combine artificial intelligence have sprung up. However, how to train the most effective artificial intelligence model has always been one of the problems that manufacturers want to solve.

Generally speaking, the conventional model training method is to continuously input training data into the model, and determine performance of the model based on an evaluation index. However, because of the different formats of the training data, the compatibility and usability of the training data are insufficient, and it causes that the trained model is only suitable for specific situations. In addition, because the conventional training data is not structured and standardized and also not time-space sequence data, the prediction performance of the trained model is affected. Therefore, the conventional model training method may have problems of insufficient warning accuracy and insufficient training data compatibility and availability.

Therefore, what is needed is to develop an improved technical solution to solve the conventional technical problems of insufficient alarm accuracy and insufficient training data compatibility and availability.

### SUMMARY OF THE INVENTION

In order to solve the conventional problem, the present invention discloses an application system for open geospatial consortium data conversion standardization and a method thereof.

According to an embodiment, the present invention discloses an application system for open geospatial consortium data conversion standardization, and the application system includes an identifying module, a conversion module, a training module and an alarm module. The identifying module is configured to receive at least one streaming image data and provide a completely-trained image identifying model for identification, and output at least one object message contained in the streaming image data, based on an identification result. The conversion module is connected to the identifying module and configured to detect a coordinate position, an image sampling time and a receiving time of the streaming image data, and embed the coordinate position, the image sampling time and the receiving time in the object message based on an open geospatial consortium data standard, so as to convert the streaming image data into a time-space sequence metadata. The training module is connected to the conversion module and configured to continuously input the time-space sequence metadata meeting the open geospatial consortium data standard to the alarm model as training data, and calculate at least one evaluation index of the alarm model until the at least one evaluation index of the alarm model meets a preset value. The alarm module is connected to the training module and configured to receive at least one streaming data meeting the open geospatial consortium data standard, and input the streaming data to the completely-trained alarm model to analyze and predict whether an abnormal condition is occurred, and generate and output an alarm message if the abnormal condition is occurred.

According to an embodiment, the present invention discloses an application method for open geospatial consortium data conversion standardization. The application method includes steps of: providing a completely-trained image identifying model to receive at least one streaming image data for identification, and outputting at least one object message contained in the streaming image data based on an identification result; detecting a coordinate position, an image sampling time and a receiving time of the streaming image data, and embedding the detected coordinate position, the image sampling time and the receiving time in the at least one object message based on an open geospatial consortium data standard, to convert the streaming image data into a time-space sequence metadata; continuously inputting the time-space sequence metadata, which meets the open geospatial consortium data standard, to an alarm model as training data, and calculating at least one evaluation index of the alarm model until the at least one evaluation index meets a preset value; receiving at least one streaming data which meets the open geospatial consortium data standard, and inputting the received streaming data to the completely-trained alarm model to analyze and predict whether an abnormal condition is occurred, and generating and outputting an alarm message if the abnormal condition is occurred.

According to above-mentioned contents, the difference between the system and method of the present invention and conventional technology is that in the present invention, the trained image identifying model is used to identify the object message contained in the streaming image data, and the coordinate position, the image sampling time and the receiving time of the streaming image data are detected and embedded into the object message based on the open geospatial consortium data standard, so that the streaming image data can be converted into a time-space sequence metadata as training data for training the alarm model; the streaming data meeting the open geospatial consortium data standard is received and inputted to the completely-trained alarm model for performing prediction; when the prediction result indicates an abnormal condition, the alarm message is outputted.

By the aforementioned technical solution, the present invention can achieve the technical effect of improving alarm accuracy and compatibility and availability of the training data.

### BRIEF DESCRIPTION OF THE DRAWINGS

The structure, operating principle and effects of the present invention will be described in detail by way of various embodiments which are illustrated in the accompanying drawings.
FIG. 1 is a system block diagram of an application system for open geospatial consortium data conversion standardization of the present invention.
FIGS. 2A to 2C are flowcharts of an application method for open geospatial consortium data conversion standardization, according to the present invention.
FIG. 3 is a schematic view showing an operation of converting streaming image data into metadata meeting the open geospatial consortium data standard, according to the present invention.
FIG. 4 is a schematic view showing an operation of training an alarm model for performing prediction, according to the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise. As used herein, the term "or" includes any and all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

First of all, the terms defined in the present invention will be described in following paragraphs before illustration of the application system for open geospatial consortium data conversion standardization and a method thereof according to the present invention. The term "metadata" defined in the present invention means the time-space sequence data converted based on open geospatial consortium data standard, and the metadata is used as training data for an artificial intelligence model. Compared with the general training data for artificial intelligence, the metadata is structured and standardized, and integrated with other open data. In actual implementation, a camera of an in-vehicle system or a smart road lamp can be installed with the model trained based on the metadata, to detect and predict an abnormal condition with artificial intelligence.

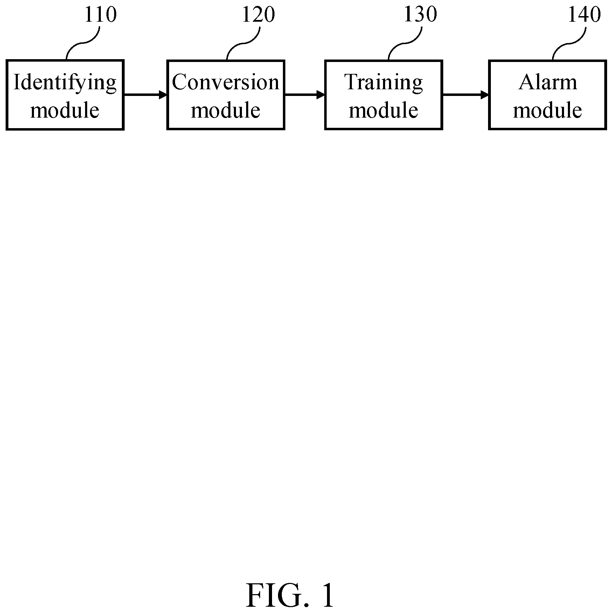

The application system for open geospatial consortium data conversion standardization and a method thereof according to the present invention will hereinafter be described in more detail with reference to the accompanying drawings. Please refer to FIG. 1, which is a system block diagram of an application system for open geospatial consortium data conversion standardization, according to the present invention. The application system includes an identifying module 110, a conversion module 120, a training module 130 and an alarm module 140. The identifying module 110 is configured to receive streaming image data, provide a completely-trained image identifying model for identification, and output an object message contained in the streaming image data, based on an identification result. For example, the object message can be a pedestrian or a vehicle. In actual implementation, the identifying module 110 records a coordinate position, an image sampling time and a receiving time of the streaming image data. When the object message is vehicle, a distance to the front vehicle, an overtaking direction, a travel speed and a travel direction of the object message can be calculated based on the changes in position and time; or when the object message is a pedestrian, a travel speed and the travel direction of the pedestrian can be calculated by the same manner. Furthermore, a visibility can further be calculated based on pixel contrast and feature vector of the streaming image. In fact, the image identifying model can use algorithm such as a convolution neural network (CNN) algorithm, a region-based convolutional neural network (RCNN) algorithm, MASK- RCNN algorithm, or YOLO algorithm.

The conversion module 120 is connected to the identifying module 110 and configured to detect a coordinate position, an image sampling time, and a receiving time of the streaming image data, and embed the coordinate position, the image sampling time and the receiving time into the corresponding object message based on an open geospatial consortium data standard, so as to convert the streaming image data into a time-space sequence metadata. In actual implementation, besides the coordinate position, the image sampling time and the receiving time, the metadata can also include a distance to the front vehicle, an overtaking direction, a travel speed, a travel direction, a visibility, a temperature, a humidity or a rainfall. Furthermore, the coordinate position includes a coordinate (such as a longitude and a latitude) positioned by a global position system or other similar coordinate positioning system, and the coordinate position can also include X-axis and Y-axis coordinates of the identified object in the image, so that the position of the object can be determined based on the coordinate, or the change in the velocity and the direction of the object can be calculated based on an change in the coordinate position.

The training module 130 is connected to the conversion module 120 and configured to continuously input the metadata, meeting the open geospatial consortium data standard, to the alarm model as training data, and calculate an evaluation index of the alarm model until the evaluation index meets a preset value. The alarm model and the image identifying model are artificial intelligence models, and the difference between these two models is that the alarm model is a model to be trained with the training data and the image identifying model is a well-trained model. In actual implementation, the evaluation index is used to evaluate performance of the artificial intelligence model, and the general evaluation indexes can be divided into two categories including recursion and classification, for example, the evaluation index for recursion can include mean square error (MSE), root mean square error (RMSE), or mean absolute error (MAE), and the evaluation index for classification includes a confusion matrix, a receiver operating characteristic (ROC) curve, or an area under curve (AUC).

The alarm module 140 is connected to the training module 130 and configured to receive streaming data meeting the open geospatial consortium data standard, and input the streaming data to the completely-trained alarm model, so as to analyze and predict whether an abnormal condition is occurred, and if the prediction result indicates that an abnormal condition is occurred, the alarm module 140 generates and outputs an alarm message. In actual implementation, the alarm module 140 can pre-store a link parameter value, and after the alarm message is generated, the alarm module 140 loads the link parameter value to establish link with an application programming interface (API) of an instant messaging (IM) program and transmit the alarm message to the IM program, so that an IM message can be generated. In an embodiment, the link parameter value can include a uniform resource identifier and an authorization token of the application programming interface.

It is to further explain that the training module 130 and the alarm module 140 can be connected to a meteorological database to load the temperature, the humidity and the rainfall corresponding to the coordinate position and the receiving time, and the loaded temperature, the humidity and the rainfall are then embedded into the corresponding metadata and streaming data with the open geospatial consortium data standard. For example, in the training module 130 the loaded data is embedded into the metadata, and in the alarm module 140 the loaded data is embedded with the streaming data meeting the open geospatial consortium data standard.

It is to be particularly noted that, in actual implementation, the modules of the present invention can be implemented by various manners, including software, hardware or any combination thereof, for example, in an embodiment, the module can be implemented by software and hardware, or one of software and hardware. Furthermore, the present invention can be implemented fully or partly based on hardware, for example, one or more module of the system can be implemented by integrated circuit chip, system on chip (SOC), a complex programmable logic device (CPLD), or a field programmable gate array (FPGA). The concept of the present invention can be implemented by a system, a method and/or a computer program. The computer program can include computer-readable storage medium which records computer readable program instructions, and the processor can execute the computer readable program instructions to implement concepts of the present invention. The computer-readable storage medium can be a tangible apparatus for holding and storing the instructions executable of an instruction executing apparatus Computer-readable storage medium can be, but not limited to electronic storage apparatus, magnetic storage apparatus, optical storage apparatus, electromagnetic storage apparatus, semiconductor storage apparatus, or any appropriate combination thereof. More particularly, the computer-readable storage medium can include a hard disk, a RAM memory, a read-only-memory, a flash memory, an optical disk, a floppy disc or any appropriate combination thereof, but this exemplary list is not an exhaustive list. The computer-readable storage medium is not interpreted as the instantaneous signal such a radio wave or other freely propagating electromagnetic wave, or electromagnetic wave propagated through waveguide, or other transmission medium (such as electric signal transmitted through electric wire), or optical signal transmitted through fiber cable). Furthermore, the computer readable program instruction can be downloaded from the computer-readable storage medium to each calculating/processing apparatus, or downloaded through network, such as internet network, local area network, wide area network and/or wireless network, to external computer equipment or external storage apparatus. The network includes copper transmission cable, fiber transmission, wireless transmission, router, firewall, switch, hub and/or gateway. The network card or network interface of each calculating/processing apparatus can receive the computer readable program instructions from network, and forward the computer readable program instruction to store in computer-readable storage medium of each calculating/processing apparatus. The computer program instructions for executing the operation of the present invention can include source code or object code programmed by assembly language instructions, instruction-set-structure instructions, machine instructions, machine-related instructions, micro instructions, firmware instructions or any combination of one or more programming language. The programming language include object oriented programming language, such as Common Lisp, Python, C++, Objective-C, Smalltalk, Delphi, Java, Swift, C#, Perl, Ruby, and PHP, or regular procedural programming language such as C language or similar programming language. The computer readable program instruction can be fully or partially executed in a computer, or executed as independent software, or partially executed in the client-end computer and partially executed in a remote computer, or fully executed in a remote computer or a server.

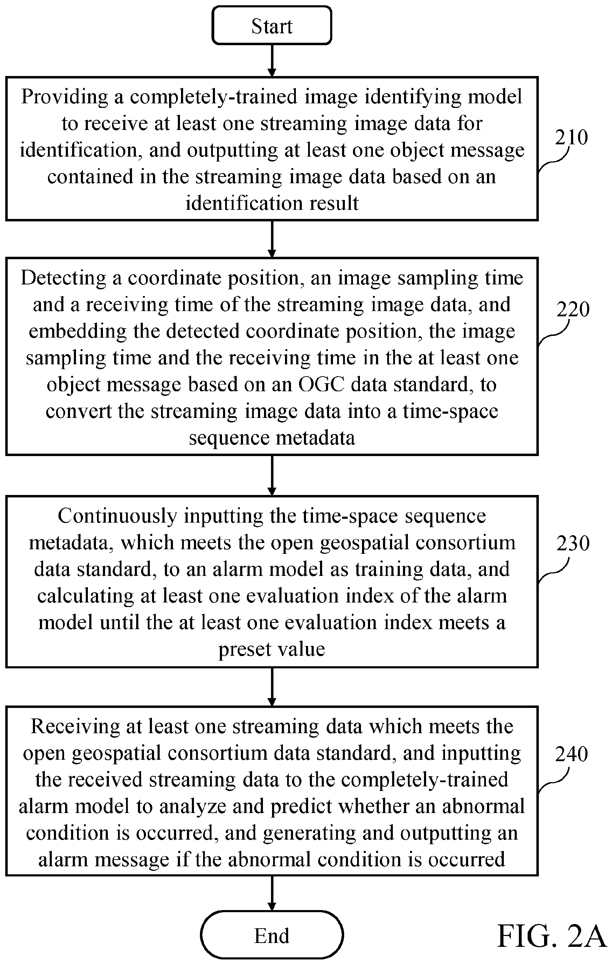

Please refer to FIGS. 2A to 2C, which are flowcharts of an application method for the open geospatial consortium data conversion standardization, according to the present invention. As shown in FIGS. 2A to 2C, the application method includes the following steps. In a step 210, a completely-trained image identifying model is provided, at least one streaming image data is received for identification, and an object message contained in the streaming image data is outputted based on an identification result. In a step 220, a coordinate position, an image sampling time and a receiving time of the streaming image data are detected and embedded in the corresponding object message based on an open geospatial consortium data standard, so that the streaming image data is converted into a time-space sequence metadata. In a step 230, the metadata meeting the open geospatial consortium data standard is continuously inputted to the alarm model as the training data, and an evaluation index of the alarm model is calculated until the evaluation index of the alarm model meets a preset value. In a step 240, the streaming data meeting the open geospatial consortium data standard is received and inputted to the completely-trained alarm model, to analyze and predict whether an abnormal condition is occurred, and if the prediction result indicates that an abnormal condition is occurred, an alarm message is generated and outputted. Through the above-mentioned steps, the trained image identifying model can be used to identify the object message contained in the streaming image data, and the coordinate position, the image sampling time and the receiving time of the streaming image data can be detected and embedded the object message based on the open geospatial consortium data standard, so that the streaming image data can be converted into a time-space sequence metadata as the training data for training the alarm model, and the streaming data meeting the open geospatial consortium data standard can be received and inputted to the completely-trained alarm model for performing prediction. If the prediction result indicates that an abnormal condition is occurred, the alarm message is outputted.

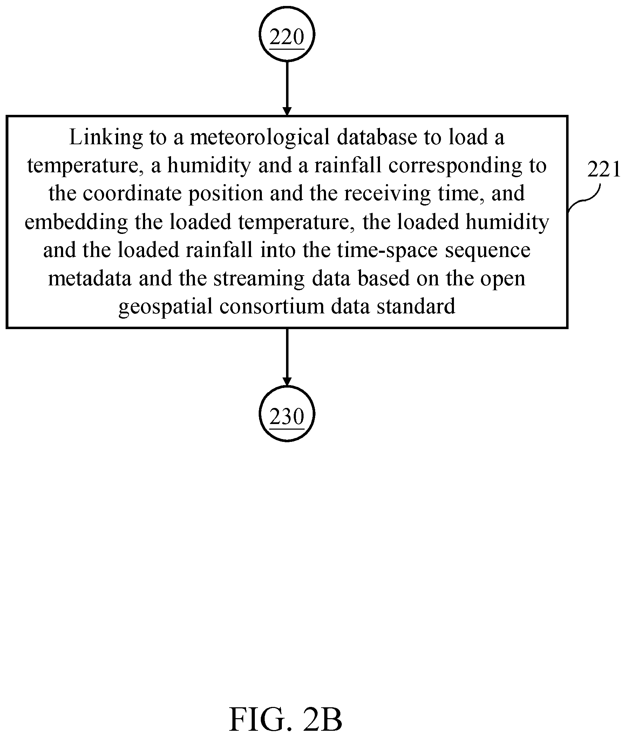

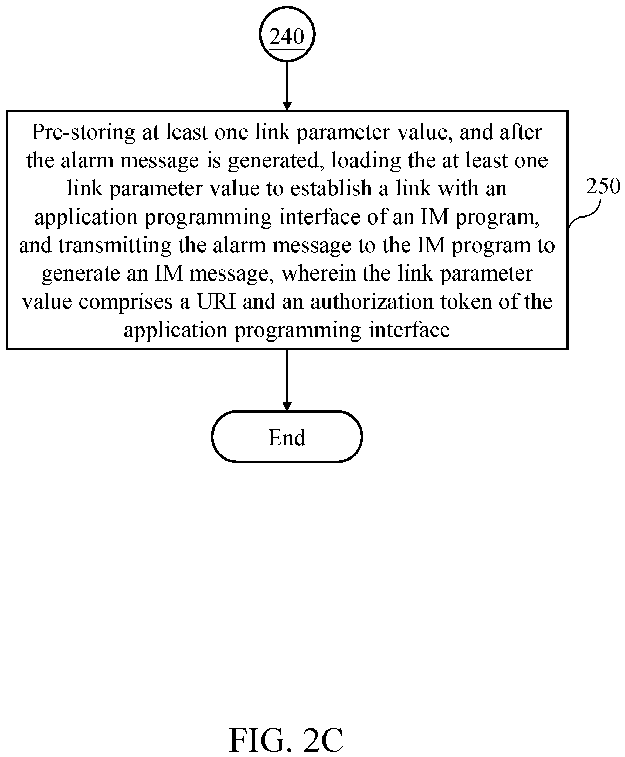

In an embodiment, a step 221 can be performed after the step 220. As shown in FIG. 2B, in a step 221, the training module 130 and the alarm module 140 can be linked to a meteorological database to load a temperature, a humidity and a rainfall corresponding to the coordinate position and the receiving time, and the loaded temperature, the humidity and the rainfall are embedded into the corresponding metadata and the streaming data with the open geospatial consortium data standard. In an embodiment, a step 250 can be performed after the step 240. As shown in FIG. 2C, in a step 250, the link parameter value is pre-stored, and after the alarm message is generated, the link parameter value is loaded to establish a link with an application programming interface of an IM program, and the alarm message is transmitted to the IM program to generate an IM message. In an embodiment, the link parameter value includes a uniform resource identifier and an authorization token of the application programming interface. By using the metadata, which is standardized and structured, and integrated with different sources, as training data for training the artificial intelligence model, the prediction performance of the artificial intelligence model can be improved.

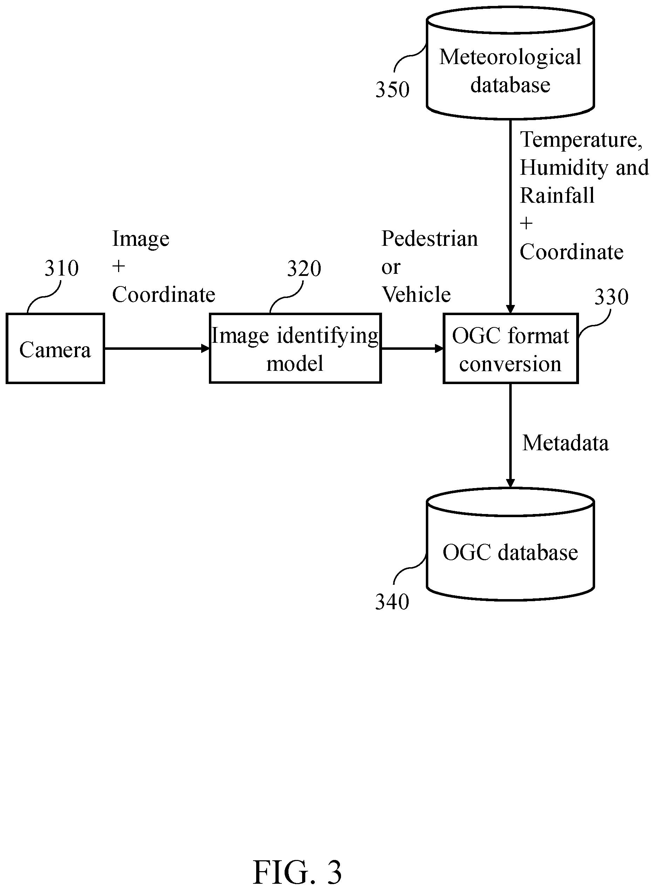

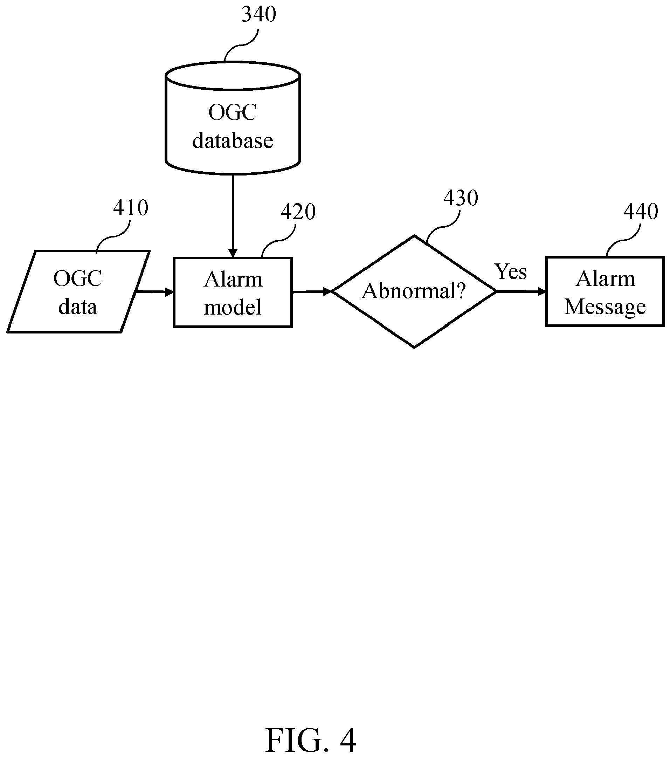

The operations of the system and method of the present invention are described in following embodiment with reference to FIGS. 3 and 4. Please refer to FIG. 3, which is a schematic view showing an operation of converting the streaming image data into the metadata meeting the open geospatial consortium data standard, according to the application system of the present invention. In a traffic condition monitoring scenario, the camera 310 used to shoot the traffic condition continuously generates the streaming image data, and the streaming image data includes a coordinate (that is, the coordinate position) positioned by the global position system (GPS) or other similar positioning system. Next, the streaming image data is transmitted to the image identifying model 320 for identification of the object message such as a pedestrian or a vehicle. The coordinate position, the image sampling time, and the receiving time of the streaming image data are also detected and embedded into the corresponding object message based on the open geospatial consortium data standard, and a OGC format conversion 330 is performed to convert the streaming image data into standardized and structured time-space sequence metadata. The metadata is stored in the OGC database 340 for sequential training of the alarm model. Furthermore, the system can be connected to a meteorological database 350 to download the temperature, the humidity and the rainfall corresponding to the above-mentioned time and position. The downloaded data, the coordinate position, the image sampling time and the receiving time are used as the metadata meeting the OGC data format. In this way, when the system predicts whether the traffic volume or vehicle speed is abnormal, the system can consider the climatic factors to significantly improve the prediction accuracy of artificial intelligence.

Please refer to FIG. 4, which is a schematic view showing an operation of training an alarm model for performing prediction, according to the present invention. According to above-mentioned content, the metadata is stored in the OGC database 340 for sequential training of the alarm model, so when the alarm model 420 is trained, the metadata meeting the open geospatial consortium data standard is loaded from the OGC database 340, and the metadata is inputted to the alarm model 420 as the training data for training of artificial intelligence. During the training process, the evaluation index corresponding to the alarm model 420 is calculated until the evaluation index of the alarm model 420 meets a preset value. For example, in a condition that the evaluation index is a confusion matrix, when an accuracy rate, which is a ratio of correctly-predicted samples to all samples, is higher than or equal to a preset value (such as 95 %), it indicates that the evaluation index meets the preset value; otherwise, the accuracy rate lower than the preset value indicates that the evaluation index does not meet the preset value. After the alarm model 420 is trained completely, the OGC data 410 can be continuously inputted to the trained alarm model 420, to determine and predict whether an abnormal condition is occurred (block 430); if the prediction result indicates that an abnormal condition is occurred, the alarm message 440 is generated and outputted. In actual implementation, in order to achieve the purpose of real-time alarm, the link parameter value is pre-stored, and after the alarm message 440 is generated, the link parameter value is loaded to establish a link to the application programming interface of the IM program, so that the alarm message 440 can be transmitted to the IM program to generate the IM message. Besides, in an embodiment, the alarm message 440 can be transmitted through SMS, email or other similar communication manner.

According to above-mentioned contents, the difference between the system and method of the present invention and conventional technology is that in the present invention, the trained image identifying model is used to identify the object message contained in the streaming image data, and the coordinate position, the image sampling time and the receiving time of the streaming image data are detected and embedded into the object message based on the open geospatial consortium data standard, so that the streaming image data can be converted into a time-space sequence metadata as training data for training the alarm model; the streaming data meeting the open geospatial consortium data standard is received and inputted to the completely-trained alarm model for performing prediction; when the prediction result indicates an abnormal condition, the alarm message is outputted. Therefore, the technical solution of the present invention is able to solve the conventional technical problems, to achieve the technical effect of improving alarm accuracy and compatibility and availability of the training data.

The present invention disclosed herein has been described by means of specific embodiments. However, numerous modifications, variations and enhancements can be made thereto by those skilled in the art without departing from the spirit and scope of the disclosure set forth in the claims.

## Claims

1. An application system for open geospatial consortium data conversion standardization, comprising:
an identifying module, configured to receive at least one streaming image data and provide a completely-trained image identifying model for identification, and output at least one object message contained in the streaming image data, based on an identification result;
a conversion module, connected to the identifying module and configured to detect a coordinate position, an image sampling time and a receiving time of the streaming image data, and embed the coordinate position, the image sampling time and the receiving time in the object message based on an open geospatial consortium data standard, so as to convert the streaming image data into a time-space sequence metadata;
a training module, connected to the conversion module and configured to continuously input the time-space sequence metadata meeting the open geospatial consortium data standard to an alarm model as training data, and calculate at least one evaluation index of the alarm model until the at least one evaluation index of the alarm model meets a preset value; and
an alarm module, connected to the training module and configured to receive at least one streaming data meeting the open geospatial consortium data standard, and input the streaming data to the completely-trained alarm model to analyze and predict whether an abnormal condition is occurred, and generate and output an alarm message if the abnormal condition is occurred.

2. The application system for open geospatial consortium data conversion standardization according to claim 1, wherein the time-space sequence metadata comprises at least one of a distance to the front vehicle, an overtaking direction, a travel speed and a travel direction of the object message calculated based on the coordinate position, the image sampling time, and the receiving time, and the time-space sequence metadata comprises a visibility calculated based on pixel contrast and a feature vector of the streaming image.

3. The application system for open geospatial consortium data conversion standardization according to claim 1, wherein the training module and the alarm module are linked to a meteorological database to load a temperature, a humidity and a rainfall corresponding to the coordinate position and the receiving time, and embed the loaded temperature, the loaded humidity and the loaded rainfall into the time-space sequence metadata and the streaming data based on the open geospatial consortium data standard.

4. The application system for open geospatial consortium data conversion standardization according to claim 1, wherein the evaluation index comprises at least one of a mean square error (MSE), a root mean square error (RMSE), a mean absolute error (MAE), a confusion matrix, a receiver operating characteristic (ROC) curve and an area under cure (AUC).

5. The application system for open geospatial consortium data conversion standardization according to claim 1, wherein the alarm module pre-stores at least one link parameter value, and after the alarm message is generated, the alarm module loads the at least one link parameter value to establish a link with an application programming interface of an instant messaging (IM) program, and transmits the alarm message to the IM program to generate an IM message, wherein the at least one link parameter value comprises a uniform resource identifier (URI) and an authorization token of the application programming interface.

6. An application method for open geospatial consortium data conversion standardization, comprising:
providing a completely-trained image identifying model to receive at least one streaming image data for identification, and outputting at least one object message contained in the streaming image data based on an identification result;
detecting a coordinate position, an image sampling time and a receiving time of the streaming image data, and embedding the detected coordinate position, the image sampling time and the receiving time in the at least one object message based on an open geospatial consortium data standard, to convert the streaming image data into a time-space sequence metadata;
continuously inputting the time-space sequence metadata, which meets the open geospatial consortium data standard, to an alarm model as training data, and calculating at least one evaluation index of the alarm model until the at least one evaluation index meets a preset value; and
receiving at least one streaming data which meets the open geospatial consortium data standard, and inputting the received streaming data to the completely-trained alarm model to analyze and predict whether an abnormal condition is occurred, and generating and outputting an alarm message if the abnormal condition is occurred.

7. The application method for open geospatial consortium data conversion standardization according to claim 6, wherein the time-space sequence metadata comprises at least one of a distance to the front vehicle, an overtaking direction, a travel speed and a travel direction of the object message calculated based on the coordinate position, the image sampling time and the receiving time, and the time-space sequence metadata comprises a visibility calculated based on a pixel contrast and a feature vector of the streaming image.

8. The application method for open geospatial consortium data conversion standardization according to claim 6, comprising,
linking to a meteorological database to load a temperature, a humidity and a rainfall corresponding to the coordinate position and the receiving time; and
embedding the loaded temperature, the loaded humidity and the loaded rainfall into the time-space sequence metadata and the streaming data based on the open geospatial consortium data standard.

9. The application method for open geospatial consortium data conversion standardization according to claim 6, wherein the evaluation index comprises at least one of a mean squared error (MSE), a root mean squared error (RMSE), a mean absolute error (MAE), a confusion matrix, a receiver operating characteristic (ROC) curve and an area under cure (AUC).

10. The application method for open geospatial consortium data conversion standardization according to claim 6, further comprising:
pre-storing at least one link parameter value; and
after the alarm message is generated, loading the at least one link parameter value to establish a link with an application programming interface of an instant messaging (IM) program, and transmitting the alarm message to the IM program to generate an IM message, wherein the link parameter value comprises a uniform resource identifier (URI) and an authorization token of the application programming interface.
